# EUROPEAN PATENT APPLICATION

(11) **EP 3 995 458 A1**
(43) Date of publication of application: **11.05.2022**
(21) Application number: 20205797.2
(22) Date of filing: 04.11.2020
(51) Int. Cl.: C02F 1/469, C02F 1/00

(54) **MEMBRANE-CAPACITIVE DEIONIZATION SYSTEM**

(71) Applicant: Voltea, Dallas, TX 75234 (US)
(72) Inventor: RAEES, Tahir, 2171 AE Sassenheim (NL); ZARRUK, Guillermo, 2171 AE Sassenheim (NL)
(74) Representative: Stolmár & Partner Patentanwälte PartG mbB

(57) **Abstract**

Disclosed is a membrane-capacitive deionization device 15 comprising at least one first electrode 11 and at least one second electrode 12 spaced apart from the first electrode 11; at least one flow path 14 between the first and second electrode 11, 12 comprising a fluid inlet 16 and at least one fluid outlet 17; means for delivering an electrical potential difference from a power source 18 to the first and second electrode 11, 12; means for allowing for the polarity of the electrical potential delivered from the power source 18 to the first and second electrode 11, 12 to be inverted; wherein the membrane-capacitive deionization device 15 comprises at least one electrical component which is configured to open electrical contacts for disconnecting the power source from the first or second electrode 11 or 12.

## Description

### INTRODUCTION

The disclosure relates to a device and method for controlling a membrane-capacitive deionization system.

EP 1 838 900 A2 discloses an electrical system of an electrochemical purification apparatus. The system includes a plurality of electrodes for deionizing fluids passing through the electrodes, a power source connected to the electrodes, the power source providing power to the electrodes while maintaining a predetermined current, a predetermined voltage, or a power within some range, a programmable logic controller, connected to the power source, for controlling the power source, and a monitoring device connected to the programmable logic controller for delivering data regarding the system to the programmable logic controller.

CN 110745912 discloses a parallel membrane capacitor deionization system, which comprises a water inlet system, a battery, a membrane capacitor deionization component, and a DC-DC converter, a control module and a membrane capacitor deionization module. The DC-DC converter is connected in series through a circuit. A flow meter is arranged on the water inlet pipe of the membrane capacitor deionization assembly, and a diaphragm valve is arranged on the water outlet pipe of the membrane capacitor deionization assembly. The water inlet pipes of several membrane capacitor deionization assemblies are connected in parallel in front of the flow meter and are connected with a water inlet main pipe. The water inlet pipes of several membrane capacitor deionization assemblies are connected in parallel behind the diaphragm valve and are connected with a water outlet main pipe, and the water inlet system is connected with the water inlet main pipe. The membrane capacitor deionization assembly and the DC-DC converter is connected to the control module signal. The invention also provides a control method of the parallel membrane capacitor deionization system, which can enable the parallel plurality of membrane capacitor deionization components to achieve balanced desalting efficiency.

### SUMMARY

The object of the present invention is to provide a device and a method for ensuring low power consumption of a membrane-capacitive deionization system. A further object is to present a method which preserves the electrical components.

These objects are achieved by a device and a method according to the independent claims. The independent claims and the sub claims can be combined in any technologically suitable and sensible way, providing further embodiments of the invention. The description, particularly in relation to the figures, provide further details characterizing the invention.

Disclosed is a membrane-capacitive deionization device comprising:
i. at least one first electrode and at least one second electrode spaced apart from the first electrode;
ii. at least one flow path between the first electrode and the second electrode comprising a fluid inlet and at least one fluid outlet;
iii. means for delivering an electrical potential difference from a power source to the first and second electrode;
iv. means for allowing for the polarity of the electrical potential delivered from the power source to the first and second electrode to be inverted; wherein
v. the membrane-capacitive deionization device comprises at least one electrical component which is configured to open electrical contacts for disconnecting the power source from the first or second electrode.

The functionality of the electrical system for the membrane-capacitive deionization and the membrane-capacitive deionization system are interlaced. The flow of ionized liquid has an immediate effect on the capacity of the electrodes. The membrane-capacitive deionization device would typically be used for deionizing liquid loaded ions. The ionization of the liquid interacts with the electrical current, charge, electrical capacity and voltage of the electrodes and the power source. The amount of liquid is regulated through adjusting the exposure of the electrodes to the ions in the liquid. If the ion concentration is high, flow is regulated lower to compensate so that the total exposure is similar or lower than an agreed standard. When the liquid has a high resistance (low ion concentration), flow and/or duration of the purification phase can be increased so that the capacity can be used.

A membrane-capacitive deionization device would have several sets of first and second electrodes. The first electrodes are spaced apart from the second electrodes and their electrical charge is opposite from the electrical charge of the second electrode. For instance, the several first electrodes can be the anodes whereas the second electrodes can be the cathodes. An electrode that is an anode attracts positively charged cations and an electrode that is the cathode attracts negatively charged anions.

In an embodiment, the electrical component is a mosfet transistor. Since currents of up to 215 Amps flow through the components, the mosfet would preferably be cooled by placing it adjacent to a cooling element such as a heat dissipating block of aluminum or the like. Water cooling systems are also possible for cooling the transistors.

In another embodiment, the membrane-capacitive deionization device comprises an electrical component for switching polarity which is a relay comprising an electric switch in which an electrical connection is physically disrupted. By the use of a relay with high conductivity contacts the current can flow without heating up the electrical component. Preferably, the switches or relays are selected to withstand high currents. Preferably, an actuator opening and closing the switch would be designed to open and separate the contacts quickly in less than a millisecond. The contacts in the switches are coated with silver to avoid contact sticking and erosion due to sparks occurring during opening and closing.

In another embodiment, the membrane-capacitive deionization device comprises an electrical resistor which is connectable to the electrodes to shunt the at least one first electrode with the at least one second electrode during the inversion of the polarity in order to reduce peaks of high current occurring during inversion of the voltage. To shunt the at least one first electrode with the at least one second electrode is essentially to short circuit the electrodes. The electrical current is allowed to discharge in the electrical resistor. The electrical energy resulting from the discharge can be directed out of the system.

Due to the agglomeration of ions adjacent to the electrodes during the purification phase, there is an additional charge introduced into the electrodes in the instant in which the electrodes are separated from the power source and coupled with an opposite polarity to the power source. When the current is introduced from the power source to the electrodes, the current the ions are able to dispense because their polarity adds to the current introduced by the power source, leading to a high peak of current in the moment in which the electrodes are separated from the power source and coupled with an opposite polarity to the power source.

By introducing an electrical resistor that is connected to both electrodes in the moment in which the electrodes are separated from the power source and coupled with an opposite polarity to the power source, this peak in current can be partially dissipated into heat in the resistor. The electrical components such as the power source, the switches, relays, transistors, are thus protected from the current peak. The electrical components can have a lower technical specification as far as their durability is concerned. The components are thus less expensive because during operation, they will not have to withstand the discussed peaks in voltage in the moment in which the electrodes are separated from the power source and coupled with an opposite polarity to the power source.

The moment in which the electrodes are separated from the power source and coupled with an opposite polarity to the power source can last for 1 to 20 milliseconds, depending on the size of the membrane-capacitive deionization device. The shunting of the electrodes via the resistor occurs right after the electrodes have been separated from the power source and can last for up to 5 milliseconds, preferably 10 milliseconds, in some cases 20 milliseconds. This might apply to mobile membrane-capacitive deionization devices on ships and vehicles. In some very large industrial units, shunting can last up to two seconds. Deionization in the purification phase can last for 1 to 5 minutes depending on the design and demand of the membrane-capacitive deionization device. The waste phase, for which the polarity of the electrodes needs to be inverted, lasts for approximately 1 to 4 minutes, also depending on the design and demand of the membrane-capacitive deionization device.

In some embodiments the waste phase can be reintroduced into the deionization housing. The housing is the body in which the electrodes are placed and where the actual deionization takes place. This could be the case in mobile membrane-capacitive deionization devices where the opportunities to remove waste liquid are not always provided. It should be pointed out that the waste liquid is merely more heavily loaded with ions than the purified liquid. Hence the waste can often be reintroduced into the source. The shunt is also connectable to the electrodes by means of a switch or relay. The contacts in the switches connecting the resistor to the electrodes are coated with silver to avoid contact sticking and erosion due to sparks occurring during opening and closing.

In another embodiment, the membrane-capacitive deionization device comprises a programmable logic control system which is configured to regulate a pump to maintain a water pressure downstream of the pump within a first pressure threshold and a second pressure threshold.

As stated above, the flow rate of the ionized liquid has an effect on the electrical capacity and hence on the electrical current and the voltage that is applicable and that is applied to the electrodes. Hence for the regulation of the electrodes, the flow rate of liquid can be taken into account as well. In some embodiments the flow rate is reduced during switching polarity of the electrodes.

In another embodiment, the membrane-capacitive deionization device comprises a recirculation valve configured to redirect a fluid flow direction through the space between the electrodes. In these embodiments the waste phase can be reintroduced into the deionization device. This could be the case in mobile membrane-capacitive deionization devices where the opportunities to discard waste liquid are not always provided. It should be pointed out that the waste liquid is merely more heavily loaded with ions than the purified liquid. Hence at sea the waste can be reintroduced into the source. In another embodiment, the membrane-capacitive deionization device comprises a high flow valve configured to shut off and/or regulate all fluid flow through the device. As indicated above, the flow rate of the ionized liquid has an effect on the electrical capacity and hence on the electrical current and the voltage that is applicable to the electrodes by the power source. By controlling the flow rate, the capacity of the electrodes can thus be kept within a desired range.

In another embodiment, the membrane-capacitive deionization device comprises sensors for measuring the conductivity and/or flow rate of fluid passing through the membrane-capacitive deionization device.

The sensors send analog or digital signals to the programmable logic control system and allows the programmable logic control system to regulate the flow of liquid via valves and pumps. The programmable logic control system can thus regulate the membrane-capacitive deionization device in a closed loop.

The capacitive-membrane deionization device can be controlled by a method of comprising the steps of providing an electrical potential difference to at least one first electrode and at least one second electrode spaced apart from the first electrode; allowing a liquid to flow between the first and second electrodes; switching the polarity of the electrical potential difference delivered to the first and second electrode; wherein the switching occurs in a switch, configured to physically space apart electrical contacts for disconnecting the power source from the first or second electrode.

In an embodiment of the present disclosure, the method of controlling a membrane-capacitive deionization comprises the step of connecting an electrical resistor to the electrodes during inversion of the polarity in order to reduce peaks of high current occurring during inversion of the voltage.

In an embodiment of the present disclosure, the method of controlling a membrane-capacitive deionization device comprises the step of providing a variable frequency regulated booster pump to feed liquid between the electrodes, wherein the pump is regulated to maintain a liquid pressure downstream of the booster pump within a first pressure threshold and a second pressure threshold.

According to an embodiment of the present disclosure, the method steps can be implemented in a computer program product comprising program code means stored on a computer-readable data carrier for performing the method.

This computer program product can be stored on a control unit or a programmable logic control device controlling the membrane-capacitive deionization system.

The programmable logic control device may include a microprocessor or central processing unit (CPU) in communication with various types of computer readable storage devices or media. Computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the CPU is powered down. Computer-readable storage devices or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the programmable logic control device in controlling the membrane-capacitive deionization system.

### BRIEF DESCRIPTION OF THE DRAWINGS

To describe the technical solutions in the embodiments of this application more clearly, the following briefly introduces the accompanying drawings required for describing the embodiments or the prior art. Apparently, the accompanying drawings in the following description show merely some embodiments of this application, and a person of ordinary skill in the art may still derive other drawings from these accompanying drawings without creative efforts.
FIG. 1 discloses a schematic diagram of a membrane-capacitive deionization device according to an embodiment of the present disclosure.
FIG. 2 discloses the voltage and current measureable in a membrane-capacitive deionization device in the moment of switching from a purification phase to a waste phase, in which the polarity of the electrical charge supplied to electrodes within the membrane-capacitive deionization device is inverted.
FIG. 3 discloses a schematic block chart of a method for operating a membrane-capacitive deionization device according to an embodiment of the present disclosure.
FIG. 4 discloses a schematic block chart of a method for operating a membrane-capacitive deionization device according to an embodiment of the present disclosure.

### DETAILED DESCRIPTION

The technical solutions of the embodiments of this application will be described in the following with reference to the accompanying drawings. It is obvious that the embodiments to be described are a part rather than all of the embodiments of this application. All other embodiments obtained by persons of ordinary skill in the art based on the embodiments of the present invention without making creative efforts shall fall within the protection scope of the present disclosure.

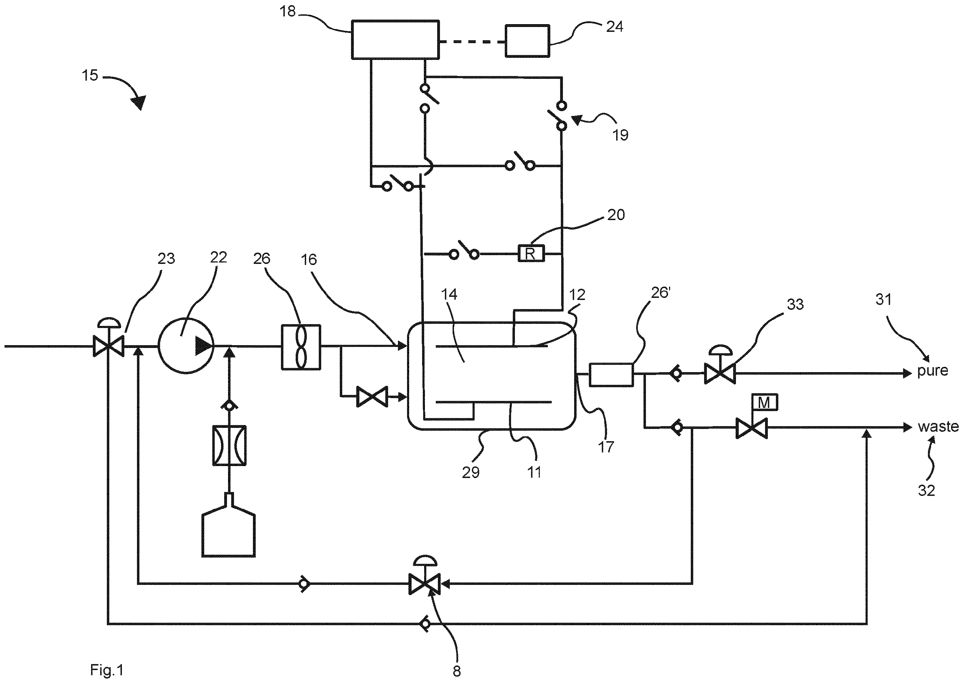

Figure 1 schematically discloses an electrical system for a membrane-capacitive deionization device 15 comprising a first electrode 11 and a second electrode 12 spaced apart from the first electrode 11. Only two electrodes 11 and 12 are shown by way of example but a membrane-capacitive deionization device would comprise several sets of first electrodes 11 and second electrodes 12, preferably a stack of 48 pairs of electrodes. Only one of the displayed switches is provided with a reference numeral 19 to clarify which of the depicted symbols is a switch. Electrodes can be connected in series, saving switches but in some embodiments each electrode would be connectable via several switches to one or another outlet (pole) of the power source 18. A membrane-capacitive deionization device 15 can comprise several filter housings 29 in which the actual deionization takes place and several stacks of first electrodes 11 and second electrodes 12 within each filter housing 29. Each housing comprises a membrane (not shown) in the vicinity of the electrodes 11, 12 to mechanically lock ions there so they do not get dragged from the electrodes 11, 12, once attracted by their polarity.

The filter housing 29 comprises at least one flow path 14 between the first electrode 11 and the second electrode 12. A width of the gap between the electrodes 11 and 12 is not depicted proportionally. Fluid, in a lot of cases mostly in liquid state and quite preferably water, can flow between the electrodes 11, 12 through the flow path 14 and be deionized due to a charge introduced into the liquid by the electrodes 11 and 12. Ions then move to the electrode 11 or 12 having the opposite charge of the ion. In a purification phase, liquid is deionized in this way and guided out of a fluid outlet 31 for purified liquid. The housing 29 comprises a fluid inlet 16 and at least one fluid outlet 17. The fluid outlet 17 in the housing 29 is connectable with said fluid outlet 31 for purified liquid by a valve 33.

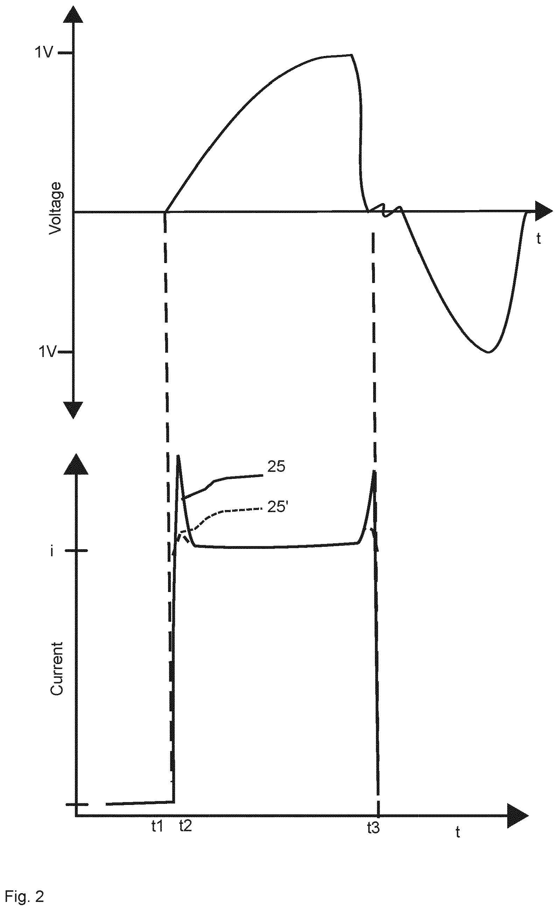

The membrane-capacitive deionization device 15 comprises means for delivering an electrical potential difference from a power source 18 to the first electrode 11 and the second electrode 12. These means comprise a power source 18 and switches 19 for connecting the power source 18 with one of the electrodes 11 or 12, depending on the desired polarity. The desired polarity depends on whether the membrane-capacitive deionization device 15 is operating in a purification phase or a waste phase. In the waste phase, ions are removed from the liquid by way of binding them in the vicinity of the electrodes 11 and 12. The housing 29 can comprise further means of helping the purification, such as membranes and filters (not shown). In the waste phase, the valve 33 is shut off and a valve is opened to allow liquid to flow out of the outlet 17 of the housing into a waste outlet 32. During the waste phase, the polarity of which the electrodes 11 and 12 are electrically charged are inverted, see figure 2. Ions maintained in the vicinity of the electrodes 11 and 12 are thrust out of the vicinity of the electrodes during the waste phase. The waste liquid is thus more heavily loaded with ions than liquid entering the housing 29 at the inlet 16. In some embodiments, the user might want to recirculate waste water. This can be achieved by means of a recirculation valve 8 which essentially connects the outlet 17 with the inlet 16 upstream of the pump 22. The valve 8 may also be used for cleaning the membrane-capacitive deionization device 15.

To allow inversion of the polarity, the membrane-capacitive deionization device 15 further comprises switches 19 for allowing for the polarity of the electrical potential delivered from the power source 18 to the first and second electrode 11, 12 to be inverted. The example in figure 1 is simplified to show the basic principle. An actual membrane-capacitive deionization device 15 would comprise several sets of electrodes and thus at least two switches 19 configured to connect each of the electrodes to one pole of the power source or the other. The power source 18 can be a DC-DC converter delivering a constant voltage depending on the set up of the membrane-capacitive deionization device 15.

The electrical system comprises at least one electrical component which is configured to open electrical contacts for disconnecting the poles (not shown) of the power source 18 from the first or second electrode 11 or 12.

The electrical contacts can be mosfet transistors each coupled to a cooler. The electrical components responsible for connecting the poles of the power source with the electrodes are schematically shown in Figure 1 as relays comprising an electric switch 19 in which an electrical connection is physically disrupted. The connecting portions of the switches 19 can be silver coated to prevent erosion of surfaces of the connecting portions.

With reference to figures 1 and 2, the electrical system further comprises an electrical resistor 20 which is connectable between the electrodes 11, 12. The resistor 20 and the switches 19 is configured to shunt the at least one first electrode 11 with the at least one second electrode 12 during the inversion of the polarity in order to produce reduced peaks 25 of electrical current i occurring during inversion of the voltage. As can be seen in figure 2, the resulting peak 25' which is measureable in the electrical system is a lot lower than the peak 25 which occurs without shunting the electrodes 11, 12.

At the time t1 in Figure 2, a current i is introduced from the power source 18 to the electrodes 11, 12. The voltage between the electrodes 11, 12 (see figure 1) is shown in the above graph of figure 2. The current i which the ions are able to dispense because of their polarity adds to the current introduced by the power source 18, leading to a high peak 25 of current in the moment in which the electrodes 11, 12 are separated from the power source 18 and coupled with an opposite polarity to the power source 18. In the example shown in figure 2, a negative voltage is switched to a positive voltage leading to an inversion of electrical current i. In the disclosed membrane deionization device 15 comprising the resistor 20 to shunt the electrodes 11, 12, the resulting peak 25' (dotted line) is significantly reduced.

In other words, by introducing an electrical resistor 20 that is connected to both electrodes 11, 12 in the moment lasting from t1 to t2 (see figure 2) in which the electrodes 11, 12 are separated from the power source 18 and coupled with an opposite polarity to the power source 18, the peak 25 in current can be dissipated into heat in the resistor 20. A reduced peak 25' in current i still occurs but it flows mostly through the resistance 20. In most cases, the switches 19 will be positioned in controllable relays. The electrical components such as the switches 19 can have a lower specification and thus be less expensive because during operation, they will not have to withstand the discussed peaks in current in the time t1 to t3 in which the electrodes 11 and 12 are separated from the power source 18 and coupled with an opposite polarity to the power source 18. The moment t1 to t2 can last for 1 to 20 milliseconds. The shunting of the electrodes 11, 12 via the resistor 20 occurs right after the electrodes 11, 12 have been separated from the power source 18 and can last for up to 5 milliseconds, preferably 10 milliseconds, in some cases 20 milliseconds. In very large industrial units shunting can last up to two seconds. Desalination in the purification phase can last for 1 to 5 minutes depending on the design and demand of the membrane-capacitive deionization device. The waste phase, for which the polarity of the electrodes needs to be inverted, lasts for approximately 1 to 4 minutes depending on the design and demand of the membrane-capacitive deionization device. The shunt is also connectable to the electrodes by means of a switch or relay.

The membrane-capacitive deionization device 15 comprises a programmable logic control system 24 which is connected electronically to the sensors 26, 2', pumps 22, valves, etc. The programmable logic control system 24 is configured to regulate the pump 22 to maintain a water pressure downstream of the pump 22 within a first pressure threshold and a second pressure threshold. The membrane-capacitive deionization device 15 also comprises a recirculation valve 8 configured to redirect a fluid flow direction through the space 14 between the electrodes 11, 12.

The deionization device 15 comprises a high flow valve 23 configured to shut off and/or regulate all fluid flow through the device 15. The valve 23 is positioned upstream of the pump 22.

The membrane-capacitive deionization device 15 comprises sensors such as a flow sensor 26 for measuring the flow rate of fluid passing through the membrane-capacitive deionization device 15 and conductivity sensors 26' for measuring the conductivity of the fluid. It is thus possible to establish a closed loop regulation of the flow rate at which liquid passes through the housing 29 comprising the electrodes 11, 12. The pump 22 can be regulated by a variable frequency drive (not shown) to control the flow rate and pressure.

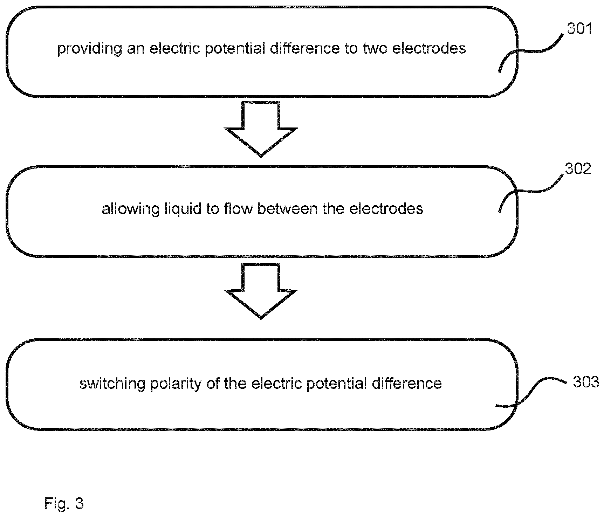

Figure 3 discloses a simple flow chart of a method of controlling the electrical system of a membrane-capacitive deionization device 15 (also see figure 1). The method according to figure 3 can be implemented into the programmable logic control system 24. The method comprises the steps 301 to 303 which may overlap in timing. In step 301, an electrical potential difference is applied at least to one first electrode 11 and to at least one second electrode 12 which is spaced apart from the first electrode 11. In step 302, a liquid is permitted to flow between the first and second electrodes 11, 12. Step 302 would be initiated by opening the valve 23 and activating the pump 22. In step 303 the polarity of the electrical potential difference delivered to the first and second electrode 11, 12 is switched. In step 303, the switching can occur in a switch 19 which is configured to physically space apart electrical contacts for disconnecting the power source 18 from the first or second electrode 11, 12, see also figures 1 and 2. With reference again to both figures 1 and 2, the steps 301 and 302 occur during a purification phase before the time t1. At the time t1, the resistor 20 is connected to the electrodes 11 and 12 and the voltage is inverted, resulting in a current i with a reduced peak 25'.

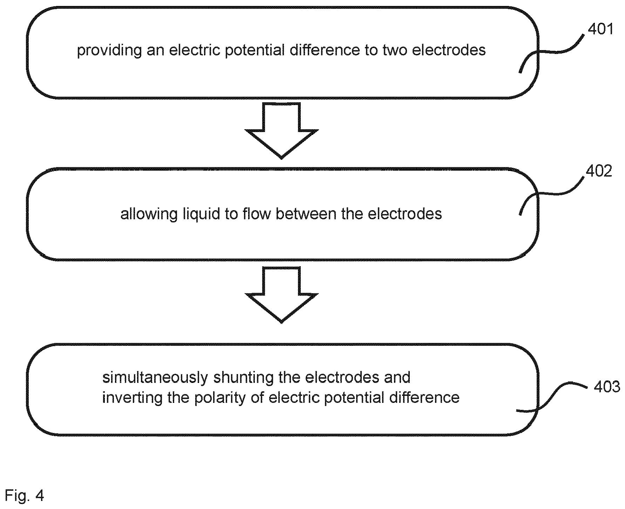

Figure 4 discloses a flow chart of a method of controlling the electrical system of a membrane-capacitive deionization device 15 (also see figure 1). The method according to figure 4 can be implemented into the programmable logic control system 24 comprising the steps 401 to 403. In step 401, an electrical potential difference is applied at least to one first electrode 11 and to at least one second electrode 12 which is spaced apart from the first electrode 11. In step 402, a liquid is permitted to flow between the first and second electrodes 11, 12. Step 402 would be initiated by opening the valve 23 and activating the pump 22. In step 403 the polarity of the electrical potential difference delivered to the first and second electrode 11, 12 is switched and at the same time a shunt is electrically connected to both of the electrodes 11, 12. In step 403, the switching of polarity and the shunting via the resistor 20 can occur in switches 19 which are configured to physically space apart electrical contacts for disconnecting the power source 18 from the first or second electrode 11, 12, see also figures 1 and 2. With reference again to both figures 1 and 2, the steps 401 and 402 occur during a purification phase before the time t1. At the time t1 step 403 is initiated and the resistor 20 is connected to the electrodes 11 and 12 and the voltage is inverted, resulting in a current from i with a reduced peak 25'. The duration from t1 to t2 depends on the scale of the membrane deionization device. In very large applications, the duration from t1 to t2 can be a second.

With reference to figures 1 to 4, steps 301 to 303 and steps 401 to 403 can occur both after a purification phase and after a waste phase, hence every time the polarity of the electrodes 11 and 12 is inverted.

With reference to figure 1, preferably, a variable frequency regulated booster pump 22 is provided to feed liquid between the electrodes in the step 302 (figure 3) and step 402 (figure 4). To allow liquid to pass through the electrodes, the programmable logic control system 24 regulates the pump 22 to maintain a water pressure downstream of the booster pump 22 within a first pressure threshold and a second pressure threshold.

Exemplary embodiments are described above. It is not intended that these embodiments describe all possible forms encompassed by the claims. The words used in the specification are words of description of embodiments rather than limitation. It is understood that various changes can be made without departing from the spirit and scope of the disclosure. As previously described, the features of various embodiments can be combined to form further exemplary aspects of the present disclosure that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and can be desirable for particular applications.

## Claims

1. A membrane-capacitive deionization device (15) comprising:
i. at least one first electrode (11) and at least one second electrode (12) spaced apart from the first electrode (11);
ii. at least one flow path (14) between the first electrode (11) and the second electrode (12) comprising a fluid inlet (16) and at least one fluid outlet (17);
iii. means for delivering an electrical potential difference from a power source (18) to the first and second electrode (11, 12);
iv. means for allowing for the polarity of the electrical potential delivered from the power source (18) to the first and second electrode (11, 12) to be inverted;
**characterized in that**
v. the membrane-capacitive deionization device (15) comprises at least one electrical component which is configured to open electrical contacts for disconnecting the power source from the first or second electrode (11 or 12).

2. A membrane-capacitive deionization device (15) according to claim 1, **characterized in that** the electrical component is a mosfet transistor.

3. A membrane-capacitive deionization device (15) according to one or both of the claims 1 to 2, **characterized in that** the electrical component is a relay comprising an electric switch (19) in which an electrical connection is physically disrupted.

4. A membrane-capacitive deionization device (15) according to one or all of the claims 1 to 3, **characterized in that** it comprises an electrical resistor (20) which is connectable to the electrodes (11, 12) to shunt the at least one first electrode (11) with the at least one second electrode (12) during the inversion of the polarity.

5. A membrane-capacitive deionization device according to one or all of the claims 1 to 4, **characterized in that** it comprises a programmable logic control system (24) which is configured to regulate a pump (22) to maintain a water pressure downstream of the pump (22) within a first pressure threshold and a second pressure threshold.

6. A membrane-capacitive deionization device (15) according to one or all of the claims 1 to 5, **characterized in that** the membrane-capacitive deionization device (15) comprises a recirculation valve (8) configured to redirect a fluid flow direction through the space between the electrodes (11, 12).

7. A membrane-capacitive deionization device (15) according to one or all of the claims 1 to 6, **characterized in that** the membrane-capacitive deionization device (15) comprises a high flow valve (23) configured to shut off and/or regulate all fluid flow through the device (15).

8. A membrane-capacitive deionization device according to one or all of the claims 1 to 7, **characterized in** it comprises sensors for measuring the conductivity and/or flow rate of fluid passing through the membrane-capacitive deionization device (15).

9. A method of controlling a membrane-capacitive deionization device (15) comprising the steps of:
i. providing an electrical potential difference to at least one first electrode (11) and at least one second electrode (12) spaced apart from the first electrode (11);
ii. allowing a liquid to flow between the first and second electrodes (11, 12);
iii. switching the polarity of the electrical potential difference delivered to the first and second electrode (11, 12);
**characterized in that**
iv. the switching occurs in a switch (19), configured to physically space apart electrical contacts for disconnecting the power source (18) from the first or second electrode (11, 12).

10. A method according to claim 11, **characterized in that** an electrical resistor (20) is connected to the electrodes (11, 12) during inversion of the polarity in order to reduce peaks of high electrical current occurring during inversion of the voltage in step iv.

11. A method according to claim 9, **characterized in that** in step ii, a variable frequency regulated booster pump (22) is provided to allow liquid to flow between the electrodes (11, 12), wherein the pump (22) is regulated to maintain a liquid pressure downstream of the pump (22) within a first pressure threshold and a second pressure threshold.

12. A computer program product comprising program code, stored on a computer-readable data carrier for performing the method according to any one of the foregoing claims 9 to 11 when said program code means is executed on a computer.

13. A computer program product comprising program code, stored on a computer-readable data carrier for performing the method according to any one of the foregoing claims 9 to 11 when said program code is executed on a programmable logic control system (24) for controlling a membrane-capacitive deionization device (15) according to one or all of the claims 1 to 8.
